# EUROPEAN PATENT SPECIFICATION

(11) **EP 1 475 390 B1**
(45) Date of publication and mention of the grant of the patent: **05.06.2013**
(21) Application number: 04290948.1
(22) Date of filing: 09.04.2004
(51) Int. Cl.: C08B 31/04, C11D 3/22, A23L 1/0522, A23L 1/09, A23L 2/52, C08B 31/00, C08B 31/18

(54) **Method for preparing glucose polymer having ion-exchanging ability and composition containing the same**
Verfahren zur Herstellung eines Glucosepolymeres mit Ionenaustauschungsfähigkeit und seinen Zusammensetzungen
Procédé de préparation d'un polymère de glucose à capacité d'échange d'ions et compositions le contenant

(30) Priority: 10.04.2003 JP 2003106933
(43) Date of publication of application: 10.11.2004
(73) Proprietor: MATSUTANI CHEMICAL INDUSTRIES CO. LTD., Itami-shi, Hyogo-ken (JP)
(72) Inventor: Matsuda, Isao, Itami-shi Hyogo (JP); Nishibata, Toyohide, Nishinomiya-shi Hyogo (JP); Ichihara, Takashi, Ashiya-shi Hyogo (JP); Fukushima, Yuriko, Tsukuba-shi Ibaraki (JP); Okuma, Kazuhiro, Sanda-shi Hyogo (JP)
(74) Representative: Hart-Davis, Jason

(56) References cited:
- EP-A- 0 010 871
- AT-B- 342 079
- US-A- 2 868 780
- US-A- 3 919 107
- US-A- 4 247 568
- WING E: "Starch Citrate: Preparation and Ion Exchange Properties" STARCH, vol. 48, 1996, pages 275-279, XP009032606

## Description

### Background of the Invention

The present invention relates to a use of a method for the preparation of a glucose polymer carrying carboxyl groups for obtaining builders, in particular for detergents or a food calcium-supplementing (or calcium-enriched) foods containing calcium ions associated thereto.

There have conventionally been known some compounds and saccharide compounds having a sequestering ability in which carboxyl groups are utilized as a functional group. High molecular weight poly(carboxylic acids) such as those disclosed in Patent Document 1 specked later prepared by polymerizing or copolymerizing, for instance, acrylic acid and/or maleic acid through radical reactions have been well known as builders for detergents, but it has also been well known that they cannot easily be decomposed microbiologically Alternatively, there has also been known a method (oxidation polymerization method) for preparing a polymer carrying carboxyl groups by polymerizing the keto-malonic acid obtained through catalytic oxidation using platinum (see, for instance, Patent Document 2 specified later), but the method suffers from such a problem that a large amount of the monomer remains unreacted or the efficiency of the polymerization reaction in this method is quite low and that this method requires the use of an expensive platinum-containing solid catalyst and this in turn makes the production cost high.

With respect to saccharide compounds having carboxyl groups, there have been known, for instance, a -glucopyranosyl compounds carrying carboxyl groups introduced into the same (see, for instance, Patent Document 3 listed below) and a method for introducing carboxyl groups into a polysaccharide by cleaving, through oxidation, the carbon-carbon bonds, which exist in monosaccharide units constituting the polysaccharide and to which the neighboring secondary alcohols are linked to thus form polysaccharide-poly(carboxylic acids) (see, for instance. Patent Document 4 and Non-Patent Documents 1 and 2). As oxidizing agents used in such cleaving reactions, there have been known, for instance, hypochlorous acid (see, for instance, Patent Document 5) and periodic acid (see, for instance, Patent Document 6), but it is necessary to regenerate periodic acid and this results in an increase of the production cost. Moreover, the polysaccharide-di-aldehydes generated during the regeneration as intermediates should further be oxidized through the use of other oxidizing agents such as a chlorate or a hypochlorite. The hypochlorite is a relatively cheap oxidizing agent, but if a known method is used, the yield achieved by the oxidation using the same is quite low and the oxidation reaction is accompanied by an insufficient oxidation reaction and further undesirable depolymerization. The known conversion method is disadvantageous from the viewpoint of production cost and environmental protection since the method requires the use of excess hypochlorous acid on the order of about three times the usual amount. The products prepared according to these methods are excellent in their sequestering ability, but they are still insufficient in the biodegradability.

In addition, there has also been known an esterification reaction through a nucleophilic substitution reaction, which makes use of an activated acylating agent such as a carboxylic acid anhydride and a carboxylic acid chloride (see, for instance, Non-Patent Document 3 listed below). Most of these esterification reactions require the use of a catalyst such as an acid, a base and/or an organic solvent. All of these reactions suffer from a problem in that they require the use of quite complicated operations because of their high complicatedness and the requirements for, for instance, the removal of the solvents.

There have also been known reports concerning esterification reaction products of sugars and organic acids (see, for instance, Patent Documents 7 and 8). Some of them relate to reaction products of saccharides with substances carrying acyl groups, which are indigestible and may be used as substitutes for fats and the remaining reports relate to esterification reaction products of saccharides, sugars and saturated fatty acids, in which these substances may be reacted with one another in a solution using a liquid hydrogen fluoride, which simultaneously serves as a catalyst and a solvent in this reaction system.

Alternatively, there has been developed a dry method in which reactants are not dissolved in a liquid such as water or an organic solvent, but directly heated. For instance, there have been reported dry reactions of starch or dextrin with anhydrides of dibasic acids such as anhydrides of succinic acid and maleic acid (see, for instance, Patent Document 9). In this technique, solid raw materials are simply admixed together and the resulting non-uniform powder mixture is subjected to a reaction by heating and the Document discloses that the reaction products are used as adhesives and thickening agents. This technique is similar to the present invention, but the former significantly differs, in the technical ideas, from the latter in that acid anhydrides are used, that the reactants are admixed together by simply mixing them in solid conditions, that the reaction system is a heterogeneous one and that the reaction products are not used in the applications, which require the use of the ion-exchanging ability of free carboxyl groups of the products.

Further, a method for preparing low-caloric dextrin (see, for instance, Patent Document 10 specified below) has also been reported and this method comprises the steps of dissolving and dispersing starch or dextrin in a mixture of citric acid and water, spray-drying the resulting solution or dispersion using a spray-drying device and further heating the spray-dried product at a temperature ranging from 140 to 220°C under reduced pressure (preparation of polysaccharides; see, for instance, Patent Document 11). Thus, indigestible products, in which the indigestibility thereof is determined by the fact that they are inactive to the action of an amylose-hydrolyzing enzyme, are formed to enhance the digestion-resistant properties of the starch or dextrin and to thus prepare water-insoluble substances. In this case, it would be recognized that citric acid is not reacted with starch or dextrin while maintaining the carboxyl group thereof in its free state, but is simply used as a crosslinking agent. It is not an object of these methods to make the most use of the ion-exchanging ability of the free carboxyl groups of carboxylic acids. In both of these methods, carboxylic acids are used as simple acid catalysts.

As polysaccharides carrying, in the molecule, charges derived from carboxyl groups, there have been known, for instance, pectin and alginic acid, but they suffer from problems such that the aqueous solutions thereof have high viscosities and that if they are added to other substances, they greatly affect the physical properties thereof.
Patent Document 1: Japanese Un-Examined Patent Publication Hei 4-209644
Patent Document 2: Japanese Un-Examined Patent Publication Hei 7-41554
Patent Document 3: Japanese Un-Examined Patent Publication Sho 63-54390
Patent Document 4: Netherlands Patent Application No. 7,012,380
Patent Document 5: Japanese Un-Examined Patent Publication Sho 60-226502
Patent Document 6: Japanese Un-Examined Patent Publication Hei 4-233901
Patent Document 7: US Patent No. 4,959,466
Patent Document 8: Japanese Un-Examined Patent Publication Sho 63-165393
Patent Document 9: US Patent No. 3,732,207
Patent Document 10: US Patent 4,247,568
Patent Document 11: US Patent No. 3,766,165
Non-Patent Document 1: Tenside Detergents, 1977, 14: 250-256
Non-Patent Document 2: Starch/Staerke, 1985, 37: 192-200
Non-Patent Document 3: Handbook of Starch Science, 1997, pp. 53-54, Published by Asakura Publishing Company

### Summary of the Invention

Accordingly, it is an object of the present invention to provide a use of a method for the preparation of a glucose polymer, which can solve or eliminate a variety of disadvantages associated with the foregoing conventional techniques such that compounds carrying carboxyl groups are inferior in the biodegradability; that the reaction efficiency of such compounds is quite low; that the conventional techniques are disadvantageous from the economical standpoint since they require the use of expensive catalysts; that they require the use of complicated steps for the removal of impurities; that the applications of the resulting products per se are highly restricted because of their insufficient usual characteristic properties; and that they cannot be used in foods or in the most important applications.

The present invention is defined in the claims. A method for the preparation of a glucose polymer, which is biodegradable and can be used in foods can ensure the achievement of a high reaction efficiency, which is economically advantageous since it never requires the use of any expensive catalyst and which does not require the use of any complicated step for the removal of impurities as well as a composition comprising the resulting glucose polymer.

The inventors of this invention have conducted various studies to solve the foregoing problems associated with the conventional techniques, have found that these problems can be solved by the use of a uniform powdery reaction system and have thus completed the present invention.

The present invention provides a use according to claim 1.

### Best Mode for Carrying Out the Invention

The raw glucose polymer used herein is at least one member selected from the group consisting of oxidized starch, starch hydrolyzates, hydrogenated starch hydrolyzates and digestion-resistant starch hydrolyzates. Particularly preferred raw glucose polymers are, for instance, hydrogenated starch hydrolyzates and digestion-resistant starch hydrolyzates. Hydrogenated starch hydrolyzates are preferably used herein, since they seldom get colored during the reaction and accordingly, the commercial value of the resulting glucose polymer is highly improved. It is also preferred to use digestion-resistant starch hydrolyzates, since they not only have effects of imparting an ion-exchanging ability to the products, but also can be used as dietary fibers and low-caloric foods.

The average degree of polymerization of the raw glucose polymer ranges from 4 to 123, more preferably 4 to 18 and most preferably 6 to 10, while taking into consideration the requirement that the polymer is admixed with a polyvalent carboxylic acid and then dried to give a powdery mixture. If using a raw glucose polymer whose average degree of polymerization is higher than the upper limit, the resulting product has a sufficiently high ion-exchanging ability, but it may generate substances insoluble in water, when dissolved in water and accordingly, the applications thereof may be limited to some extent. On the other hand, if using a raw glucose polymer whose average degree of polymerization is lower than the lower limit, it cannot be converted into a powdery product.

For starch specific examples thereof include potato starch, sweet potato starch, cornstarch and tapioca starch, either of which may effectively be used.

The polyvalent carboxylic acid usable in the present invention should have at least two carboxyl groups as functional groups in the molecule. Specific examples thereof are citric acid, malic acid, succinic acid, fumaric acid, malonic acid, maleic acid, adipic acid, tartaric acid and mixtures thereof. Among them, citric acid is most preferred carboxylic acid since it is a trivalent and cheaper carboxylic acid.

In the method used according to the present invention, a raw glucose polymer and at least one polyvalent carboxylic acid are first dissolved in water to form an aqueous solution.

The mixing ratio of the raw glucose polymer to the polyvalent carboxylic acid may appropriately be selected while taking into consideration the intended characteristic properties to be imparted to the resulting glucose polymer, but the ratio preferably ranges from 1.5:1 to 10:1, more preferably 1.5:1 to 9:1, most proferably 1.5:1 to 2:1 from such standpoints that the polyvalent carboxylic acid should be linked to the raw glucose polymer in an amount sufficient for imparting a satisfactory ion-exchanging ability to the final polymer product and that a uniform powdery mixture should be prepared.

In addition, the amounts of the raw glucose polymer and the polyvalent carboxylic acid to be dissolved in water are not restricted to specific ranges insofar as these substances ensure the formation of an aqueous solution, but it is common that the total amount of the raw glucose polymer and the polyvalent carboxylic acid preferably ranges from 20 to 50 parts by mass and more preferably 30 to 40 parts by mass per 100 parts by mass of water. These substances are usually dissolved in water under ordinary pressure and at a temperature ranging from 10 to 60°C, usually at ordinary temperature, if necessary, with stirring.

The resulting aqueous solution is dried at a temperature preferably ranging from 95 to 110°C for 1 to 10 hours to thus give uniform powder or in general uniform amorphous powder. The resulting product in its powdery state is subjected to a heat-treatment preferably carried out for 2 to 15 hours to thus obtain an intended glucose polymer having an ion-exchanging ability.

Examples of drying and powdering methods for obtaining uniform powder from a mixed aqueous solution of a raw glucose polymer and a polyvalent carboxylic acid include spray drying, drum drying and freeze drying methods and either of these methods may effectively be employed in the method used according to the invention.

When adopting a spray drying method using a spray dryer by way of an example of such drying method, uniform spherical powder may be prepared under the following spray conditions: a hot air temperature of 160°C; an exhaust air temperature of 95°C; and an atomizer's rotational frequency of 12,000 rpm.

Then the uniform powder thus prepared and comprising the raw glucose polymer and the polyvalent carboxylic acid is subjected to a heat-treatment. In this respect, a variety of the usual devices can be employed as heating means used in this step. Examples thereof effectively used herein are those permitting continuous heating such as an oil bath and a rotary kiln and specific examples thereof include a vacuum roasting device, an extruder, a drum dryer and a fluidized bed-heating device.

The temperature of the powder upon the heat-treatment is according to the present invention set at a level ranging from 100 to 125°C. In this connection, the higher the reaction temperature, the higher the rate of the reaction. If the reaction temperature is higher than 125°C, the reaction rate is high, but water-insoluble substances may sometimes formed as has been described above. Such water-insoluble substances are never formed under the temperature condition specified above, in particular, at a temperature ranging from 100 to 125°C . Moreover, the raw glucose polymer is exclusively linked to the polyvalent carboxylic acid through monoester bonds and the resulting product is accordingly almost free of any diester bond. Further, it has been made clear that the reaction product includes a large number of free carboxyl groups and that the product has an improved higher ion-exchanging ability.

The time for the heat-treatment is not particularly restricted and it is appropriately selected while taking into consideration a variety of factors such as the average degree of polymerization of the raw glucose polymer used, the mixing ratio of the polymer to the polyvalent carboxylic acid, the temperature of the reactants during the heat-treatment and the desired characteristic properties to be imparted to the intended final product, but it in general ranges from 1 to 20 hours and preferably 2 to 10 hours.

The purification of the product obtained in the reaction by heating may be omitted depending on the applications thereof, but when using the same, in particular, in foods or the like, the product may effectively be purified by the usual methods and devices used for the purification of the saccharides, for instance, a filtering device, desalting through the use of an ion-exchange resin and/or a membrane separator.

### Evaluation of Product

The ion-exchanging ability of the glucose polymer as the product obtained in the reaction by heating according to the method used according to the present invention can be evaluated by the method detailed below.

### [Amount of Polyvalent Carboxylic Acid Linked to Product]

The quantity of the ester bonds present in the glucose polymer prepared by the reaction, by heating, of a raw glucose polymer with a polyvalent carboxylic acid is determined using the high performance liquid chromatography (hereunder referred to as "HPLC") to thus evaluate the reaction efficiency of the heat reaction between the raw glucose polymer and the polyvalent carboxylic acid. The quantitation method will be detailed below.

### HPLC Device: Model LC8020 available from Tosoh Corporation;

Conditions for HPLC: Column used: Shodex Rspak KC-811 (available from Showa Denko, K.K.); Buffer Solution (Mobile Phase): 15mM HClO₄ (pH 2.0); Flow Rate: 0.5 mL/min; Column Temperature: 60°C; Detector: UV (215 nm). The internal standard used for the quantitative analysis was acetic acid anhydride.

The term "the amount of linked polyvalent carboxylic acid" herein used means a value obtained by quantitatively determining "the molar number of un-linked polyvalent carboxylic acid" on the basis of the data as determined by chromatography using UV detection and by subtracting "the molar number of un-linked polyvalent carboxylic acid present in the product obtained in the reaction by heating" from "the molar number of un-linked polyvalent carboxylic acid present in the uniformized powder prior to the heat treatment" (in other words, the overall molar number of the polyvalent carboxylic acid present in the sample) and the value is expressed in terms of the molar number of linked polyvalent carboxylic acid per mole of the anhydrous glucose unit as the structural unit of the raw glucose polymer.

### [Esterification Index]

It is quite important to discriminate the mode of linkage or to discriminate whether the raw glucose polymer and the polyvalent carboxylic acid are linked through monoester bonds or diester bonds, in the evaluation of the ion-exchanging ability of the reaction product.

First, the glucose polymer is subjected to the neutralization titration to thus determine the total molar number C, that is, the sum of the molar number of carboxyl groups of un-linked polyvalent carboxylic acid and that of free carboxyl groups present on the linked polyvalent carboxylic acid (or the molar number of carboxyl groups except for those linked to the glucose polymer). Then the molar number of un-linked polyvalent carboxylic acid as determined by HPLC is multiplied by the carboxyl value (this is equal to 3 in case of citric acid) of the polyvalent carboxylic acid to thus determine the molar number D of carboxyl groups present on the un-linked polyvalent carboxylic acid. Finally, the molar number D is subtracted from the total molar number C to thus determine the molar number of free carboxyl groups present on the linked polyvalent carboxylic acid. This is expressed in terms of the number of free carboxyl groups per mole of the linked polyvalent carboxylic acid and defined to be an esterification index. For instance, in case of citric acid as a tri-carboxylic acid, the esterification index thereof is 2.0 when all of the ester bonds consist of monoester bonds, while it is 1.0 when all of the ester bonds consist of diester bonds. In this connection, the rate of monoesters is reduced and that of diesters increases as the esterification index is reduced from 2.0 and closer to 1.0. In case of dicarboxylic acid, the esterification index is equal to 1.0 when all of the ester bonds consist of monoester bonds.

### [Index of Ion-Exchanging Ability]

This ion-exchanging ability index is determined on the basis of the amount of the linked polyvalent carboxylic acid (hereunder referred to as A) and the esterification index (hereunder referred to as B) specified above. If the ion-exchanging ability index is assumed to be Y, the following relation holds true: Y = AB. This relation corresponds to the molar number of free carboxyl groups per mole of the anhydrous glucose unit.

The method used according to the present invention will hereunder be described in more detail with reference to the following Examples 1, 3 and 5 to 10, but the present invention is defined in the claims.

Examples 2 and 4 illustrate effects of parameter ranges defined in claim 1.

### Example 1

There was dissolved, in 7 kg of water, 2.4 kg of "PINEDEX #2" (the trade name of a starch hydrolyzate having an average degree of polymerization of 10, available from Matsutani Chemical Industries, Co. Ltd.) as a raw glucose polymer with stirring and subsequently 0.6 kg of citric acid (available from Archer Daniels Midland Company in the United States) as a polyvalent carboxylic acid was dissolved therein (glucose units/citric acid (molar ratio) = 4.75/1). Then the resulting aqueous solution was spray-dried using a spray dryer to give uniform raw glucose polymer/citric acid powder. Thereafter, 1.5 kg of the powder was heat-treated over 400 minutes while maintaining the temperature of the powder at 120°C. The product thus obtained was found to have an ion-exchanging ability index of 0.26 and an esterification index of 2.0 and when it was dissolved in water, any insoluble matter was not generated at all in the solution. The results thus obtained are listed in the following Table 1.

### Example 2

The same procedures used in Example 1 were repeated under the same conditions used therein except that the temperature of the powder during the reaction by heating was changed to 90, 100, 110, 135, 160 and 170°C and that the heating time was changed as specified below to thus conduct the reaction.

As a result, it was found that the esterification reaction never proceeded at all at a heating temperature of 90°C.

On the other hand, there were produced a glucose polymer having an ion-exchanging index of 0.12 and an esterification index of 2.0 at 100°C for a heating time of 900 minutes and a glucose polymer having an ion-exchanging index of 0.20 and an esterification index of 2.0 at 110°C for a heating time of 900 minutes.

There were likewise produced a glucose polymer having an ion-exchanging index of 0.29 and an esterification index of 0.19 at 135°C for a heating time of 300 minutes and a glucose polymer having an ion-exchanging index of 0.34 and an esterification index of 1.6 at 160°C for a heating time of 120 minutes.

In addition, at a powder-heating temperature of 170°C, the reactants were molten through heating and they could not maintain their powdery states.

The glucose polymers prepared at 135 and 160°C generated insoluble matter when they were dissolved in water, while those prepared at 100 and 110°C never generated insoluble matter when dissolved in water. These results are summarized in the following Table 1.

**Table 1: Effect of Powder Temperature**

| Temp. Of Powder | Heating Time (min) | Ion-Exch. Ability Index | Esterification Index | Remarks |
|---|---|---|---|---|
| 90°C | 900 | 0 | 0 | The esterification reaction did not proceed. |
| 100°C | 900 | 0.12 | 2.0 | There was not observed any water-insoluble matter. |
| 110°C | 900 | 0.20 | 2.0 | There was not observed any water-insoluble matter. |
| 120°C | 400 | 0.26 | 2.0 | There was not observed any water-insoluble matter. |
| 135°C | 300 | 0.29 | 1.9 | There was observed generation of water-insoluble matter. |
| 160°C | 120 | 0.34 | 1.6 | There was observed generation of water-insoluble matter. |
| 170°C | -- | -- | -- | The reactants were molten and could not hold their powdery states. |

### Example 3

"PINEDEX #2" as a raw glucose polymer and citric acid as a polyvalent carboxylic acid were dissolved in water with stirring at a mixing ratio of 10.5/1, 9/1, 4.75/1, 2/1, 1.5/1 and 1.33/1 (molar ratio) and then each resulting solution was spray-dried using a spray dryer to thus give uniform and amorphous powder. As a result, it was found that uniform powdery products were obtained at mixing ratios of 10.5/1, 9/1, 4.75/1, 2/1 and 1.5/1 (molar ratio), but any appropriate powder product was not obtained at a mixing ratio of 1.33/1 (molar ratio). Each resulting powdery product was then heat-treated. The heat-treatment was carried out under the same conditions used in Example 1 except that the mixing ratio was changed and that the heating reaction times were all set at 400 minutes. As a result, it was found that the reaction did not proceed so much at a mixing ratio of 10.5/1 and provided a glucose polymer having an ion-exchanging index of 0.08 and an esterification index of 2.0; that the reaction at a mixing ratio of 9/1 provided a glucose polymer having an ion-exchanging index of 0.12 and an esterification index of 2.0; that the reaction at a mixing ratio of 4.75/1 provided a glucose polymer having an ion-exchanging index of 0.26 and an esterification index of 2.0; that the reaction at a mixing ratio of 2/1 provided a glucose polymer having an ion-exchanging index of 0.44 and an esterification index of 2.0; and that the reaction at a mixing ratio of 1.5/1 provided a glucose polymer having an ion-exchanging index of 0.5 and an esterification index of 2.0. These results are summarized in the following Table 2.

**Table 2: Effect of Mixing Ratio (Molar Ratio) of Raw Glucose Polymer to Polyvalent Carboxylic Acid (120°C, PINEDEX #2, Citric Acid)**

| Mixing Ratio | Ion-Exch. Ability Index | Esterification Index | Remarks |
|---|---|---|---|
| 10.5:1 | 0.08 | 2.0 | There was not observed any water-insoluble matter. |
| 9:1 | 0.12 | 2.0 | There was not observed any water-insoluble matter. |
| 4.75:1 | 0.26 | 2.0 | There was not observed any water-insoluble matter. |
| 2:1 | 0.44 | 2.0 | There was not observed any water-insoluble matter. |
| 1.5:1 | 0.50 | 2.0 | There was not observed any water-insoluble matter. |
| 1.33:1 | 0.34 | 1.6 | Any uniform powder could not be obtained. |

### Example 4

Reactions were conducted under the same conditions used in Example 1 except for using "STABILOSE S-10" (the trade name of an oxidized starch having an average degree of polymerization of 123, available from Matsutani Chemical Industries, Co. Ltd.), "PINEDEX #100" (the trade name of a starch hydrolyzate having an average degree of polymerization of 18, available from Matsutani Chemical Industries, Co. Ltd.), "PINEDEX #2" (the trade name of a starch hydrolyzate having an average degree of polymerization of 10, available from Matsutani Chemical Industries, Co. Ltd.), "GLISTAR" (the trade name of a starch hydrolyzate having an average degree of polymerization of 6, available from Matsutani Chemical Industries, Co. Ltd.), ''PINEDEX #3" (the trade name of a starch hydrolyzate having an average degree of polymerization of 4, available from Matsutani Chemical Industries, Co. Ltd.) and "Product 1 made on an experimental basis" (average degree of polymerization of 3; a starch hydrolyzate obtained by further hydrolyzing PINEDEX #3; hereunder simply referred to as "Product 1").

Consequently, when using "STABILOSE S-10" as a raw glucose polymer, uniform powder could be obtained, but the powder generated water-insoluble matter in the subsequent heat-treating experiment. The raw glucose polymer "PINEDEX #100" provided a glucose polymer having an ion-exchanging ability index of 0.19 and an esterification index of 1.9, the raw glucose polymer "PINEDEX #2" provided a glucose polymer having an ion-exchanging ability index of 0.26 and an esterification index of 2.0, the raw glucose polymer "GLISTAR" provided a glucose polymer having an ion-exchanging ability index of 0.22 and an estenfication index of 2.0 and the raw glucose polymer "PINEDEX #3" provided a glucose polymer having an ion-exchanging ability index of 0.20 and an estenfication index of 2.0. In addition, "Product 1" did not provide any uniform powdery mixture with citric acid. The foregoing results are summarized in the following Table 3.

**Table 3: Effect of Average Degree of Polymerization (ADP) of Raw Glucose Polymer (Citric Acid; 120°C)**

| Av. Mol. Wt. | ADP | Ion-Exch. Ability Index | Esterification Index | Remarks |
|---|---|---|---|---|
| 20000 | 123 | -- | -- | There was observed generation of water-insoluble matter. |
| 3000 | 18 | 0.19 | 1.9 | There was not observed any water-insoluble matter. |
| 1600 | 10 | 0.26 | 2.0 | There was not observed any water-insoluble matter. |
| 1000 | 6 | 0.22 | 2.0 | There was not observed any water-insoluble matter. |
| 700 | 4 | 0.20 | 2.0 | There was not observed any water-insoluble matter. |
| 600 | 3 | -- | -- | Any uniform powder could not be obtained. |

### Comparative Example 1

In the method used according to the present invention a raw glucose polymer and a polyvalent carboxylic acid are once converted into a mixed aqueous solution, the aqueous solution is subsequently dried to give uniform powder and then the resulting uniform powder is heat-treated. Thus, the results of reactions observed when practicing the method used according to the present invention were compared with those observed when heating a simple mixed powder of a raw glucose polymer and a polyvalent carboxylic acid.

The ingredients used in this Comparative Example 1 were reacted under the same conditions used in Example 1 except for using "Product 2 made on an experimental basis" (hereunder referred to as ''Product 2") (a membrane-fractioned product of TK-16 (trade name of a starch hydrolyzate available from Matsutani Chemical Industries, Co. Ltd.); average degree of polymerization of 10) as a raw glucose polymer. As a result, it was found that uniform powder provided a glucose polymer having an ion-exchanging ability index of 0.26 and an esterification index of 2.0, while the presence of any linkage between the polyvalent carboxylic acid and the raw glucose polymer was not confirmed at all for the simple mixed powder as a comparative sample.

This result clearly indicates that the uniform powder is highly reactive.

### Comparative Example 2

The heat-treatment was conducted under the same conditions used in Example 1 except for using "Product 2" and "FIBERSOL-2" (the trade name of a digestion-resistant starch hydrolyzate having an average degree of polymerization of 10, which is a starch hydrolyzate scarcely hydrolyzed by any human digestive enzyme and it is admitted as water-soluble dietary fibers; available from Matsutani Chemical Industries, Co. Ltd.). The viscosity of the resulting heat reaction product was compared with those for sodium alginate and pectin and as a result, it was found that the product had a low viscosity value even at a low temperature and that the viscosity thereof was almost independent of the temperature conditions. These results are summarized in the following Table 4.

**Table 4**

| | Viscosity (mPa-s) | |
|---|---|---|
| Temperature (°C) | 20 | 70 |
| Heat reaction product derived from Product 2 (10% W/V) | 4.4 | 2.9 |
| Heat reaction product derived from FIBERSOL-2 (10% W/V) | 4.2 | 2.6 |
| Sodium alginate (1% W/V) | 169.2 | 45.8 |
| Pectin (1% W/V) | 11.9 | 5.2 |

### Example 5

The same procedures used in Example 1 were repeated except that malic acid or succinic acid was used as a polyvalent carboxylic acid, that the mixing ratio of the polyvalent carboxylic acid to "PINEDEX #2" as a raw glucose polymer was selected such that the ratio: glucose unit/polyvalent carboxylic acid was equal to 4.75/1 (molar ratio) and that the heating time was changed to thus prepare desired glucose polymers.

As a result, there were prepared a glucose polymer having an ion-exchanging ability index of 0.11 and an esterification index of 1.0 (this indicates that only monoester bonds are present) when using succinic acid as a polyvalent carboxylic acid and a heating time of 300 minutes and a glucose polymer having an ion-exchanging ability index of 0.14 and an esterification index of 1.0 (this indicates that only monoester bonds are present) when using malic acid as a polyvalent carboxylic acid and a heating time of 300 minutes, respectively. The results obtained are listed in the following Table 5.

### Example 6

The same procedures used in Example 1 were repeated except that two kinds of polyvalent carboxylic acid or malic acid and succinic acid were used, that the mixing ratio of the polyvalent carboxylic acids to "PINEDEX #2" as a raw glucose polymer was selected such that the ratio: glucose unit/malic acid/succinic acid was equal to 4.75/0.5/0.5 (molar ratio) and that the heating time was changed to thus prepare desired glucose polymers.

As a result, it was found that the glucose polymer obtained when setting the heating time at 300 minutes had an ion-exchanging ability index of 0.13 and an esterification index of 1.0 (this indicates that only monoester bonds are present). The results obtained are listed in the following Table 5.

**Table 5: Effect of Kinds of Polyvalent Carboxylic Acids Used (120°C , PINEDEX #2, average degree of polymerization of 10)**

| Polyvalent Carboxylic Acid | Ion-Exch. Ability Index | Esterification Index | Remarks |
|---|---|---|---|
| Citric acid | 0.26 | 2.0 | There was not observed any water-insoluble matter. |
| Malic acid | 0.14 | 1.0 | There was not observed any water-insoluble matter. |
| Succinic acid | 0.11 | 1.0 | There was not observed any water-insoluble matter. |
| Malic acid + Succinic acid* | 0.13 | 1.0 | There was not observed any water-insoluble matter. |

| | | | |
|---|---|---|---|
| *: The molar ratio of the mixture of these two acids was identical to that of each single acid. | | | |

### Example 7

The same procedures used in Example 1 were repeated except for using "Product 3 made on an experimental basis" (a membrane-fractioned product derived from "H-PDX" (the trade name of a hydrogenated starch hydrolyzate available from Matsutani Chemical Industries, Co. Ltd.); average degree of polymerization of 10; hereunder simply referred to as "Product 3") as a raw glucose polymer and changing the heating time to thus obtain a desired glucose polymer. As a result, the resulting glucose polymer was found to have an ion-exchanging ability index of 0.28 and an esterification index of 2.0 for a heating time of 350 minutes. The reaction product obtained from "Product 3" as a hydrogenated starch hydrolyzate was found to be almost free of coloration due to the reaction by heating.

### Example 8

The same procedures used in Example 1 were repeated except for using "FIBERSOL 2" as a raw glucose polymer and changing the heating time to thus obtain a desired glucose polymer. As a result, the resulting glucose polymer was found to have an ion-exchanging ability index of 0.28 and an esterification index of 2.0 for a heating time of 350 minutes.

### Example 9: Determination of Re-Staining-Inhibitory Ability

A detergent comprises an additive called builder. The builder is a re-staining-inhibitory agent for preventing any re-staining of the wash or re-adhesion of once released stain onto the wash and it improves the cleaning effect of the surfactant included in the detergent. As a builder presently most frequently used, there may be listed sodium carboxymethyl cellulose (hereunder referred to as "CMC-Na"). This builder forms an anion when dissolved in water and the anions cover the surface of the wash from which stains have been removed in the form of a thin membrane-like layer and also cover the surface of the stain particles removed from the wash. Consequently, both of the fiber surface and the stain particles are negatively charged, they accordingly repulse each other and as a result, the wash is protected from any re-staining. However, CMC-Na is quite expensive and it is further said that the builder may cause pollution of water like zeolite.

The re-staining-inhibitory ability of the glucose polymer was evaluated by the determination of its manganese dioxide-dispersing ability. As sample materials, there were used "the heat reaction product derived from Product 2" and "the heat reaction product derived from FIBERSOL-2", while CMC-Na was used as a control. Briefly, the method used herein comprised the steps of dispensing 1.0 g of manganese dioxide and 50 mL of a 0.05% aqueous solution of a sample builder in a 50 mL volume, graduated test tube with ground glass stopper, shaking the test tube up and down over 100 times and then allowing to stand for 4 hours in a thermostatic chamber maintained at 25°C. Then a volumetric pipette was fixed at a position 5 cm below the surface of water, 15 mL of the sample liquid was collected and the amount of manganese dioxide present in the suspension was determined with an oxidation-reduction titration method using Fe(SO₄)₂ - (NH₄)₂-KMnO₄ titration system.

The results thus obtained are summarized in the following Table 6. As a result, it was confirmed that both of "the heat reaction product derived from Product 2" and "the heat reaction product derived from FIBERSOL-2" were excellent in re-staining-inhibitory ability since they were found to have re-staining-inhibitory abilities higher than that observed for CMC-Na. At this stage, regarding the relation between the manganese dioxide-dispersing ability and the detergency, it has already been reported that the higher the dispersion power, the higher the detergency. In other words, the foregoing results clearly indicate that these heat reaction products can be used as re-staining-inhibitory agents superior to CMC-Na.

**Table 6: Evaluation of Manganese Dioxide-Dispersing Ability**

| Material | Manganese dioxide-dispersing ability (mg, MnO₂/100ml (0.05% solution)) |
|---|---|
| Heat reaction product derived from Product 2 | 65.2 |
| Heat reaction product derived from FIBERSOL-2 | 110.0 |
| CMC-Na | 17.7 |

### Example 10: Determination of Ion-Exchanging Ability

A glucose polymer was prepared using "the heat reaction product derived from FIBERSOL-2" (hereunder referred to as "FS2/Cit") and the ion-exchanging ability thereof was evaluated according to the following method. First, 100 mg of FS2/Cit was dissolved in 10 ml of water to give an aqueous solution and the solution was neutralized with sodium hydroxide to thus convert the carboxyl groups present on the FS2/Cit into sodium salt-form (the amount of the sodium hydroxide was 13.055mM as expressed in terms of the quantity of sodium ions). The solution was introduced into a dialysis membrane (Spectra/Por CE, MWCO: 1000), the solution was thus dialyzed against a 65.275 mM calcium chloride aqueous solution as an external solution with stirring, while appropriately sampling the external solution, and the quantity of sodium ions present in the sample solution was determined using an atomic absorption spectrophotometer (AA-680 available from Shimadzu Corporation) to thus inspect the glucose polymer for the ion-exchanging ability between sodium and calcium ions. As a result, it was found that 79% of the theoretical carboxyl groups present on FS2/Cit were exchanged with calcium ions after the dialysis over 6 hours and this clearly indicates that the glucose polymer possesses a satisfactory ion- exchanging ability.

### Formulation 1 (Calcium-Enriched Beverage)

FS2/Cit was neutralized with calcium carbonate to thus convert the carboxyl groups present on the FS2/Cit into calcium salt-form (hereunder referred to as "FS2/Cit-Ca"). The FS2/Cit-Ca thus prepared was soluble in water (at least up to 50% (w/v)) and the resulting solution was free of any turbidity and a transparent liquid. When using it in a beverage, it never impaired the appearance of the beverage and never adversely affected the taste and quality thereof and it permitted the formulation of a calcium-enriched beverage (containing 90 mg of calcium per 100 ml of the beverage). The formulation thereof will be detailed in the following Table 7.

**Table 7: Formulation of Calcium-Enriched Beverage (Amt. (g) per 100 ml)**

| | |
|---|---|
| FS2/Cit-Ca | 3.92 |
| Granulated sugar | 7.00 |
| Citric acid | 0.35 |
| Mixed vitamin | 0.20 |
| Sodium chloride | 0.005 |
| Potassium chloride | 0.008 |
| Flavor | 0.10 |
| Water | Add water to 100 ml |

As has been described above in detail, the method used according to the present invention comprises the step of preparing a uniform powdery mixture of a raw glucose polymer and a polyvalent carboxylic acid prior to the reaction thereof and thus permits the solution of a variety of disadvantages associated with the conventional techniques for the preparation of polymers carrying carboxyl groups.

The method used according to the present invention can ensure the achievement of a high reaction efficiency, is economically advantageous since it never requires the use of any expensive catalyst and does not require the use of any complicated step for the removal of impurities.

The glucose polymer prepared by the method used according to the present invention is biodegradable and can be used in, for instance, various foods and/or builders.

## Claims

1. Use of a method for the preparation of a glucose polymer having an ion-exchanging ability consisting of the steps of drying a mixed aqueous solution containing a raw glucose polymer and a polyvalent carboxylic acid to thus form a uniform powdery mixture and then subjecting the powdery mixture to a heat treatment, wherein the raw glucose polymer and the polyvalent carboxylic acid are first dissolved in water to form an aqueous solution, wherein the raw glucose polymer is at least one member selected from the group consisting of oxidized starch, starch hydrolyzates, hydrogenated starch hydrolyzates and digestion-resistant starch hydrolyzates and the average degree of polymerization thereof ranges from 4 to 123, and wherein the temperature of the powder upon the heat-treatment ranges from 100 to 125°C, for obtaining directly from said method a glucose polymer having an ion-exchanging ability as a component of a builder or a food.

2. The use of claim 1, wherein the raw glucose polymer is at least one member selected from the group consisting of oxidized starch, starch hydrolyzates, hydrogenated starch hydrolyzates and digestion-resistant starch hydrolyzates and the average degree of polymerization thereof ranges from 4 to 18.

3. The use of claim 1 or 2, wherein the polyvalent carboxylic acid is at least one member selected from the group consisting of citric acid, succinic acid, maleic acid, fumaric acid and tartaric acid.

4. The use as set forth in any one of claims 1 to 3, wherein the glucose polymer has an ion-exchanging ability index as expressed by the function: Y = AB (Y represents an ion-exchanging ability index, A represents the amount of linked polyvalent carboxylic acid and B represents an esterification index) ranging from 0.1 to 0.5.

5. The use as set forth in any one of claims 1 to 4, wherein the mixing ratio (molar ratio) of the raw glucose polymer to the polyvalent carboxylic acid ranges from 1.5: 1 to 9:1.

6. The use according to any of the preceding claims,
wherein the glucose polymer prepared according to the method is subjected to a calcium-ion-exchange, for obtaining directly from said method a glucose polymer having ion-exchangeability as a component of a food.

## Patentansprüche

1. Verwendung eines Verfahrens zur Herstellung eines Glucosepolymers mit einer Ionenaustauschfähigkeit, bestehend aus den Schritten des Trocknens einer gemischten wässrigen Lösung enthaltend ein Rohglucosepolymer und eine polyvalente Carbonsäure, um auf diese Weise ein einheitliches pulvriges Gemisch zu bilden, und dann Unterziehen des pulvrigen Gemischs einer Wärmebehandlung, wobei das Rohglucosepolymer und die polyvalente Carbonsäure zur Bildung einer wässrigen Lösung zuerst in Wasser aufgelöst werden, wobei das Rohglucosepolymer mindestens ein Bestandteil ist ausgewählt aus der Gruppe bestehend aus oxidierter Stärke, Stärkehydrolysaten, hydrierten Stärkehydrolysaten und verdauungsresistenten Stärkehydrolysaten, und sein durchschnittlicher Polymerisationsgrad im Bereich von 4 bis 123 liegt, und wobei die Temperatur des Pulvers nach der Wärmebehandlung im Bereich von 100 bis 125 °C liegt, um direkt aus dem Verfahren ein Glucosepolymer mit einer Ionenaustauschfähigkeit als eine Komponente eines Builders oder eines Nahrungsmittels zu erhalten.

2. Verwendung nach Anspruch 1, wobei das Rohglucosepolymer mindestens ein Bestandteil ist ausgewählt aus der Gruppe bestehend aus oxidierter Stärke, Stärkehydrolysaten, hydrierten Stärkehydrolysaten und verdauungsresistenten Stärkehydrolysaten und sein durchschnittlicher Polymerisationsgrad im Bereich von 4 bis 18 liegt.

3. Verwendung nach Anspruch 1 oder 2, wobei die polyvalente Carbonsäure mindestens ein Bestandteil ist ausgewählt aus der Gruppe bestehend aus Citronensäure, Bernsteinsäure, Maleinsäure, Fumarsäure und Weinsäure.

4. Verwendung wie in einem der Ansprüche 1 bis 3 dargelegt, wobei das Glucosepolymer einen lonenaustauschfähigkeitsindex, wie durch die Funktion: Y = AB ausgedrückt (wobei Y einen lonenaustauschfähigkeitsindex darstellt, A die Menge der verknüpften polyvalenten Carbonsäure darstellt und B einen Veresterungsindex darstellt), im Bereich von 0,1 bis 0,5 aufweist.

5. Verwendung wie in einem der Ansprüche 1 bis 4 dargelegt, wobei das Mischverhältnis (Mol-Verhältnis) des Rohglucosepolymers zur polyvalenten Carbonsäure im Bereich von 1,5 : 1 bis 9 : 1 liegt.

6. Verwendung nach einem der vorangehenden Ansprüche, wobei das nach dem Verfahren hergestellte Glucosepolymer einem Calcium-Ionenaustausch unterzogen wird, um direkt aus dem Verfahren ein Glucosepolymer mit Ionenaustauschfähigkeit als eine Komponente eines Nahrungsmittels zu erhalten.

## Revendications

1. Utilisation d'un procédé pour la préparation d'un polymère du glucose ayant une capacité d'échange d'ions consistant en les étapes de séchage d'une solution aqueuse mixte contenant un polymère du glucose brut et un acide carboxylique polyfonctionnel pour former ainsi un mélange pulvérulent uniforme puis d'exposition du mélange pulvérulent à un traitement thermique, où le polymère du glucose brut et l'acide carboxylique polyfonctionnel sont d'abord dissous dans l'eau pour former une solution aqueuse, où le polymère du glucose brut est au moins un membre choisi dans le groupe consistant en l'amidon oxydé, les hydrolysats d'amidon, les hydrolysats d'amidon hydrogénés et les hydrolysats d'amidon résistant à la digestion et le degré moyen de polymérisation de celui-ci va de 4 à 123, et où la température de la poudre lors du traitement thermique va de 100 à 125°C, pour obtenir directement à partir dudit procédé un polymère du glucose ayant une capacité d'échange d'ions comme composant d'un agent de texture ou d'un aliment.

2. Utilisation selon la revendication 1, où le polymère du glucose brut est au moins un membre choisi dans le groupe consistant en l'amidon oxydé, les hydrolysats d'amidon, les hydrolysats d'amidon hydrogénés et les hydrolysats d'amidon résistant à la digestion et de degré moyen de polymérisation de celui-ci va de 4 à 18.

3. Utilisation selon la revendication 1 ou 2, où l'acide carboxylique polyfonctionnel est au moins un membre choisi dans le groupe consistant en l'acide citrique, l'acide succinique, l'acide maléique, l'acide fumarique et l'acide tartrique.

4. Utilisation selon l'une quelconque des revendications 1 à 3, où le polymère du glucose a un indice de capacité d'échange d'ions tel qu'il est exprimé par la fonction : Y = AB (Y représente un indice de capacité d'échange d'ions, A représente la quantité d'acide carboxylique polyfonctionnel lié et B représente un indice d'estérification) allant de 0,1 à 0,5.

5. Utilisation selon l'une quelconque des revendications 1 à 4, où le rapport de mélange (rapport molaire) du polymère du glucose brut à l'acide carboxylique polyfonctionnel va de 1,5 : 1 à 9 : 1.

6. Utilisation selon l'une quelconque des revendications précédentes, où le polymère du glucose préparé selon le procédé est soumis à un échange d'ions calcium, pour obtenir directement à partir dudit procédé un polymère du glucose ayant une capacité d'échange d'ions comme composant d'un aliment.
